# EUROPEAN PATENT SPECIFICATION

(11) **EP 1 677 990 B1**
(45) Date of publication and mention of the grant of the patent: **22.10.2008**
(21) Application number: 04768704.1
(22) Date of filing: 29.09.2004
(51) Int. Cl.: B41M 5/30

(54) **IMPROVEMENTS IN THERMAL PAPER**
VERBESSERUNGEN VON THERMOPAPIER
PERFECTIONNEMENTS RELATIFS A DU PAPIER THERMIQUE

(30) Priority: 30.09.2003 GB 0322907
(43) Date of publication of application: 12.07.2006
(73) Proprietor: ARJO WIGGINS LIMITED, Basingstoke, Hants RG24 8BA (GB)
(72) Inventor: WARD-ASKEY, Andrew, Berks SL3 7ES (GB); COOPER, John Brian, Winchester, Hants SO21 2NN (GB); HOBSON, Michael Eric, Bucks HP27 9SE (GB)
(74) Representative: Scott, Susan Margaret
(86) International application number: PCT/GB2004/004161
(87) International publication number: WO 2005/032838

(56) References cited:
- WO-A-02/064376
- US-A- 5 134 189
- PATENT ABSTRACTS OF JAPAN vol. 0131, no. 77 (M-818), 26 April 1989 (1989-04-26) & JP 1 008087 A (OJI PAPER CO LTD), 12 January 1989 (1989-01-12)

## Description

The present invention relates to thermal paper of the type in which print is developed by the direct application of heat to a thermally sensitive material.

In the manufacture of conventional thermal paper, a substrate such as paper is coated over its entire surface with an aqueous dispersion comprising colour formers, colour developers and sensitizers which are initially colourless but which become coloured on exposure to heat. Such dispersions can often contain a wax, for example a stearamide wax. When such a paper is passed under the print head of a thermal printer, the areas which are activated by the heated print elements of the printer form coloured images on the surface of the paper. Such papers work well and produce clear images, but are associated with a number of problems. The high chemical loading has been associated with environmental problems. The application of the thermal coating to the paper is an expensive operation, which must be carried out using complex and expensive coating equipment. And crucially, conventional printing to thermal coating is difficult, and can only be carried out by performing an expensive surface treatment to achieve compatibility between ink and coating or by specific printing processes e.g. UV cured inks.

Attempts have been made to develop a thermal ink which reduces the problems associated with thermal papers by obviating the need to provide a thermal coating over the whole surface of the paper. US 5,888,283 describes a thermal ink which can be printed onto paper using conventional printing processes, thus eliminating the need to use coating equipment. The ink is pigment free, and comprises an aqueous dispersion of an initially colourless colour former and an initially colourless colour developer which combine to form colour upon the application of heat, the ink having a solids content of at least 40% by weight. It preferably includes a sensitizer which at least partially surrounds the particles of colour developer. Suitable sensitizers include diphenoxyethane, aryl or alkyl-substituted biphenyls such as p-benzyl biphenyl, or toluidide phenyl hydroxynaphthoates and aromatic diesters such as dimethyl or dibenzyl terephthalate and dibenzyl oxalate. These materials may be used alone, or they may be combined with waxes or fatty acids. The ink is applied by a flexographic or gravure printing process, and develops colour when passed through a direct thermal printer.

The development described above has, however, a number of disadvantages. Specifically, using standard "stock" substrates under standard thermal imaging equipment leads to poor image formation. High energy laser sources are needed to produce acceptable image intensity. EP 600 441A describes a method which comprises irradiating a printed surface with a laser, the surface being printed with an ink which comprises a leuco dye as a colour former, an acidic substance as a colour developer, and at least one background colour formation inhibitor which is a water-soluble amino acid, and ammonium salt of an inorganic acid, a pH buffer, or water. However, laser printer types are not standard within the thermal paper industry and require cost expenditure to replace traditional thermal printing equipment if they are to be used.

There is therefore a need for a system in which a thermal ink can be used to provide good print quality using standard thermal imaging equipment, there is minimal discolouration during storage, and the product can be readily and economically printed using conventional non thermal imaging processes before it is thermally printed.

We have developed a system using a thermal printing ink which, when printed on a very specific substrate, is resistant to premature colouration during storage of the coated papers, and may be imaged to produce high quality prints using standard thermal writing equipment at standard energy levels. Because the present invention uses a thermal ink rather than a thermal coating as used in conventional thermal paper, the ink can be applied by printing on specific areas of a sheet. This reduces chemical costs and also allows the non-coated areas on the sheet to be printed by conventional means (wet offset and the like) to add value to the sheet, which is generally not possible using conventional thermal papers. The printing of the thermal ink can be carried out at the same time as the printing of information using conventional ink, which means that, for the first time, it is possible to produce visually attractive products such as labels, tickets or till rolls which carry high quality conventionally printed information, which will develop a high quality thermal image when subsequently passed through a thermal printer. The substrate used to carry the printed material may be made on a conventional paper making machine and, unlike conventional thermal coated papers, does not require subsequent processing using a separate coating machine.

Accordingly the present invention provides a method of preparing a thermally printable sheet which comprises providing a substrate comprising a base sheet having at least one surface coated with a layer containing a pigment in solid porous particulate form, and, using a printer, printing onto the coated surface of said substrate, a thermal ink which comprises a colour former, a colour developer and a sensitizer, characterised in that the sensitizer comprises dimethyl terephthalate, and that the ink also comprises at least one pigment.

The invention also provides a thermally printable sheet which comprises a base sheet having at least one surface coated with a layer containing a pigment in solid porous particulate form, and printed upon said coated surface, a thermal ink as defined above.

Preferably the thermal ink used in the present invention is free from wax. In conventional thermal formulations, paraffin wax is used to reduce unwanted discolouration of the thermal paper during storage. It is a surprising feature of the present invention that discolouration can be reduced without the presence of wax in the formulation.

Any suitable colour former and colour developer may be used in the ink of the present invention. Suitable colour formers include, for example, diaryl methanes including 4,4-bis(dimethylaminobenzyhdroxybenzyl)ether, N-halophenyl, leuco auramine, and N-2,4,5-trichlorophenyl leuco auramine; fluorans including 2-dibenzylamino-6-diethylaminofluoran, 2-anilino-6-diethylaminofluoran, 3-methyl-2-anilino-6-diethylaminofluoran, 2-anilino-3-methyl-6-(ethyl-isopentylamino)fluoran, 2-anilino-3-methyl-6-butyl aminofluoran, 2-chloro-3-methyl-6-diethylaminofluoran, 3,6-dimethoxyfluoran, and 7,7'-bis(3-diethylaminofluoran); spiropyrans including 3-methylspirodinaphtho-pyran, 3-ethylspirodinaphthopyran, 3,3'-dichlorospirodinaphthopyran, 3-benzyl spironaphthopyran, and 3-methylnaphtho-(3-methoxybenzo)spiropyran; azaphthalides including 3-(2-ethoxy-4-diethylaminophenyl)-3-(1-octyl-2-methylindol-3-yl)-4-azaphthalide, and 3-(2-ethoxy-4-diethylaminophenyl)-3-(1-ethyl-2-methylindol-3-yl)-4-azaphthalide; indolylphthalides including 3-(p-dimethylaminophenyl)-3-(1,2-dimethylindol-3-yl)phthalide and 3-(p-dimethylaminophenyl)-3-(2-methylindol-3-yl)phthalide; thianyl methanes; and styryl quinoline.

Preferred colour formers for use in the present invention are 3,3-bis(4-dimethylaminophenyl)-6-dimethylaminophthalide, common name CVL (blue); 2'-(dibenzylamino)-6'-(diethylamino)spiro(isobenzofuran-1(3H),9'-xanthen)-3-one, Fuji Green; spiro[isobenzofuran-1(3H),9'-[9H]xanthen]-3-one,6'-(diethylamino)-2'-octylamino-, ODB1 (black); 3-dibutylamino-6-methyl-7-anilinofluoran (alternative nomenclature: spiro[isobenzofuran-1(3H),9'[9H]xanthen]-3-one,-6'(dibutylamino)-3'-methyl-2'-(phenylamino)-, ODB2 (black); 2'-anilino-6'-(ethyl(isopentyl)amino)-3'-methylspiro(isobenzofuran-1(3H),9-xanthen)3-one, S-205 (black); 3-diethylamino-6-methyl-7-(3'-methylanilino)fluoran, ODB7 (black); benzenamine,4,4'((9-butyl-9H-carbazol-3-yl)methylene)bis(N-methyl-N-phenyl-), SRB (blue); 6'-diethylamino-3'-methyl-2'-(2,4-xylidino)spiro(isobenzofuran-1(3H),9-xanthen)3-one, Black XV; 2-methyl-6-(N-p-tolyl-N-ethylamino)-fluoran, ETPM (red); spiro(isobenzofuran-1(3H),9'-(9H)xanthen)-3-one,3'-chloro-6'-(cyclohexylamino), Orange 100; 3,3'-bis(2-methyl-1-octyl-1H-indol-3-yl)-1(3H)-isobenzofuranone, Red 1-6B; Orange 1-G; Red MC30; Yellow 1-3R; and 3,3-bis(2,2-bis(4-(dimethylamino)phenyl)ethenyl) - 4,5,6,7-tetrachloro- 1 (3H)-Isobenzofuranone, a green/black with activity in the near infrared useful in optical character recognition applications (OCR), trade name MG1 (Marks Chemicals).

A particularly preferred colour former for use in the present invention which has demonstrated particular advantages is 3-dibutylamino-6-methyl-7-anilinofluoran (alternative nomenclature: spiro[isobenzofuran-1(3H),9'-[9H]xanthen]-3-one,-6'-(dibutylamino)-3'-methyl-2'-(phenylamino)-, known by the common name ODB2, CAS number 89331-94-2, and available under the Trade Marks Black I-2R (Ciba), Black T-2R (Ciba), and PSD 184 (Nisso) amongst others. Most preferably, this material is the only colour former used in the present invention. However, if desired, one or more additional colour formers may be added. Such additional colour former is preferably present in an amount of less than 10%, preferably less than 5%, especially less than 1%, by wt based on total colour former. The 3-dibutylamino-6-methyl-7-anilinofluoran may contain those impurities normally introduced under manufacturing conditions; these should preferably not exceed 1%wt.

Suitable colour developers include, for example, bis-(3-allyl-4-hydroxy phenyl)sulphone, 2,4-dihydroxy diphenyl sulphone, p-hydroxybenzylphenol, 4,4'-disulphonyl phenol, 3-benzyl salicylic acid, 3,5-di-t-butylsalicylic acid, 4-hydroxyphenyl-4-isopropoxyphenylsulphone, 4,4'-thiodiphenol phenol-formaldehyde novolac resin, alphanaphthol, bisphenol A, bisphenol sulphone, benzyl 4-hydroxybenzoate, 3,5-dimethyl-4-hydroxybenzoic acid, 3-isopropylsalicylic acid, 4,4'-isopropylidene diphenol, and 3,3'-dimethyl-4,4'-thiodiphenol.

A particularly preferred colour developer for the present invention is bisphenol A. Most preferably, this material is the only colour developer used in the present invention. However, if desired, one or more additional colour developers may be added. Such additional colour developer is preferably present in an amount of less than 10%, preferably less than 5%, especially less than 1%, by wt based on total colour developer. The bisphenol A may contain those impurities normally introduced under manufacturing conditions; these should preferably not exceed 1%wt.

Preferably DMT is the only sensitizer present, although one or more additional sensitizers may be present if desired. To prevent excessive discolouration, such additional sensitizer is preferably present in an amount of less than 10%, preferably less than 5%, by wt based on total sensitizer. The DMT may contain those impurities normally introduced under manufacturing conditions; these should preferably not exceed 1%wt.

The pigment comprised in the thermal ink used in the invention is preferably a high surface area, absorptive pigment, for example precipitated calcium carbonate, silica or calcined clay. Surprisingly, the presence of a pigment does not render the ink unsuitable for use in the intended application; rather, the pigment helps to prevent migration of the ink onto the thermal printing head during imaging, giving a high quality image.

Inks comprising 3-dibutylamino-6-methyl-7-anilinofluoran as the only colour former and bisphenol A as the only colour developer, together with DMT as sensitizer, have been found to give particularly good performance, with minimal discolouration of the thermal paper on storage.

The ink suitably consists of three individual components mixed to form the ink precursor:
1) A dye system which includes the colour former and DMT, and which may also include components such as, for example, one or more surfactants, preferably a polyvinyl alcohol surfactant and optionally additional surfactants, and antifoam agents.
2) A coreactant system which includes the colour developer and DMT, and which may also include components such as, for example, one or more surfactants, preferably a polyvinyl alcohol surfactant and optionally additional surfactants, and antifoam agents.
3) A pigment dispersion in slurry form.

The thermal ink used in the present invention is suitably prepared by grinding the above three components separately. These separate grinding operations reduce the tendency for unwanted colour reaction and produce a non-coloured ink vehicle. Preferably the particles in each component are ground to a particle size of less than 1.5µ, especially less than 1.0µ, for example from 0.25µ to 1.0µ. The components are then mixed together, optionally including additional components such as slip agents and defoamers, to form the resulting ink, which may be printed using conventional means, being compatible with standard flexographic printing processes in terms of viscosity and cell transfer. Ink in which the solid particles have a particle size of less than 1.5µ produces especially advantageous results.

Other additives which may be present if desired include zinc stearate which can be added as a slip agent to prevent build up on the thermal printing head, depending on the thermal printer design.

The substrate used in the method of the present invention comprises a base sheet, which may for example be synthetic paper or polymer film but which is preferably paper, coated on at least one surface with a coating comprising a layer containing a pigment in solid porous particulate form. The pigment present in the coating has a high surface area and a high absorptivity, preferably with a surface area measured at >100 m²/g using the BET method or an ink absorbency of >50g oil/100g pigment (as described in Kirk-Othmer Encyclopedia of Chemical Technology, 3rd Edition, Volume 17, pages 796 - 808). It preferably comprises calcined clay, calcium carbonate (in precipitated form, which is porous and of high absorptivity), and/or silica. The coating also preferably comprises at least one additional pigment, preferably a plastic pigment in the form of hollow spheres.

The thermally printable sheet of the present invention may be developed using conventional thermal printers. In such printers, heat is generated by the application of short pulses of low-power electrical energy. There is no requirement to use specialist equipment such as lasers.

The thermally printable sheet according to the invention is prepared by printing the thermal ink onto the coated surface of the substrate, using a printer. It is a major advantage provided by the invention that the coating applied to the substrate may be applied to the whole surface of a sheet of paper during a conventional paper-making process without the use of separate, expensive coating machines, while the thermal ink can be printed onto only those parts of the coated surface where thermal activity is required, using a conventional printer, if desired at the same time as conventional ink is printed onto the surface to provide high-quality visible information.

The specific coating present on the substrate provides a number of advantages when used in combination with the thermal ink defined above. The thermal ink is held near the surface of the sheet to permit good contact with the thermal printing head and maximise print formation, and there is adequate absorption of the thermal ink to prevent unwanted contamination of the thermal printing head which impairs print quality. In addition, thermal insulation is provided such that energy applied to the surface is maximised within a localised area rather than being dissipated through the sheet. This maximises the thermal print formation.

Most surprisingly, the use of the thermal ink defined above in combination with a substrate bearing a coating comprising a layer containing a pigment in solid porous particulate form, leads to a significant reduction in discolouration during storage compared with conventional thermal papers. Accordingly the invention provides the use of DMT in a thermal ink comprising a colour former and a colour developer, to reduce unwanted discolouration during storage of a thermally printable sheet product comprising a base sheet having at least one surface coated with a layer containing a pigment in solid porous particulate form, absorptive pigment, said thermal ink being printed upon said coated surface. The invention further provides the use of a combination of a thermal ink comprising DMT, a colour former and a colour developer, and a surface coating comprising a layer containing a pigment in solid porous particulate form, to reduce unwanted discolouration during storage of a thermally printable sheet product.

The following Examples illustrate the invention.

### Example 1

### Dye Material

Under agitation of <100 rpm using a Greaves or Silverson mixer, 2.25 dry parts of a 20% Polyvinyl alcohol solution (Moviol 4/88 - Clariant or Poval 203 - Kurraray) was added to a pre-selected quantity of water to achieve 40% total solids of the dye material blend. 0.08 dry parts of Surfinol 420 (Air Products) were quickly added to reduce foaming. Agitation was increased to 200 rpm and 4.56 dry parts of colour former, such as Pergascript T2R (Ciba Specialty Chemicals) were added, and mixing continued until the colour former was fully dispersed. 2.58 dry parts of DMT sensitiser (Molekula Ltd., UK) were then added to the mixture under agitation of <100 rpm. Lastly a very small amount of Drewplus S4386 defoamer (Drew) was added.
The resulting fully dispersed mixture was added to a bead mill and continued to be ground until a size of less than 1µm median size and preferably ± 0.5µm median size was achieved, as measured using a Malvern Multisizer. Particular attention was taken to ensure that the temperature during the grinding process did not rise to above 30°C. This prevented unwanted gellation of the mixture.

### Co-reactant Material

Under agitation of <100 rpm using a Greaves or Silverson mixer, 2.25 dry parts of a 20% Polyvinyl alcohol solution (Moviol 4/88 - Clariant or Poval 203 - Kurraray) was added to a pre-selected quantity of water to achieve 40% total solids of the co-reactant material blend. 0.08 dry parts of Surfinol 420 (Air Products) were quickly added to reduce foaming. Agitation was increased to 200 rpm and 10 dry parts of Bisphenol A coreactant (Molekula Ltd., UK) were added. Mixing continued until the colour former was fully dispersed. 2.58 dry parts of DMT sensitiser (Molekula Ltd., UK) were then added to the mixture under agitation of <100 rpm. Lastly a very small amount of Drewplus S4386 defoamer (Drew) was added.
The resulting fully dispersed mixture was added to a bead mill and continued to be ground until a size of less than 1µm median size and preferably ± 0.6µm median size was achieved, as measured using a Malvern Multisizer. Particular attention was taken to ensure that the temperature during the grinding process did not rise to above 30°C. This prevented unwanted gellation of the mixture.

### Pigment Material

Commercial high surface area pigment such as precipitated calcium carbonate (Calopake - F, SMI) was added to a pre-selected quantity of water to achieve a final solids of 55%. The mixture was agitated using a Greaves or Silverson mixer such that a particle size of less than 1.5µm median size was achieved.

### Ink Mixture

In a large stirred beaker or similar vessel, a pre-selected quantity of water to achieve a final ink solids of 46% was added followed by the co-reactant material mixture. 5.7% dry parts of a 30% solution of Hidorin Z-7-30 (Chukyo Europe) was added to the stirred co-reactant mixture.
The pigment material blend was next added to the stirred vessel and lastly the dye material was added.

The composition of the resultant ink is shown in the following Table 1.

**Table 1**

| Material | % by weight |
|---|---|
| Polyvinyl alcohol - Moviol 4/88 | 4.5 |
| Bisphenol A | 10 |
| Black T2R | 4.56 |
| Dimethyl terephthalate | 5.7 |
| Calopake-F | 20 |
| Zinc stearate - Hidorin Z-7-30 (30%E.E) | 5.7 |
| Surfinol 420 | 0.3 |
| Drew N40 (defoamer) | 0.1 |
| Total | 100 |

The ink was applied by a laboratory flexographic printing unit at a coatweight range of up to 4gsm. Using a conventional thermal fax printer, at a pulse signal range of 1.0 - 1.4msec images were produced, and the results are given in Table 2. For comparison, the experiment was repeated using an uncoated base paper. Higher numbers obtained using a Gretag reader indicate a higher visibility printed image.

**Table 2**

| | Gretag Measurement | |
|---|---|---|
| | 1.2msec | 1.4msec |
| Uncoated base paper | 0.06 | 0.04 |
| Precoated base paper | 0.31 | 0.72 |

It can be seen that the print quality is significantly better using the coated paper than using the uncoated paper. In both cases, minimal transfer of ink to the thermal printer head was observed.

### Example 2

### Storage Stability

Ink samples prepared as in Example 1 were stored in standard warehousing conditions (i.e. neither in excessive direct light nor in extremes of temperature) for a 12 month period. Ink colour did not deteriorate during this storage period.

The ink was printed and tested using the methodology of Example 1. Results of a very similar order of magnitude were obtained indicating a very good storage potential of the ink.

Ink printed paper samples produced as in Example 1 were dark stored in a laboratory cupboard for a 12 month period. The ink printed paper samples remained white in appearance. Imaged samples using the method described in Example 1 and measured using the Gretag densitometer gave exactly the same results as when the paper was freshly printed with ink. This indicated very good stability of the printed paper samples.

## Claims

1. A method of preparing a thermally printable sheet which comprises providing a substrate comprising a base sheet having at least one surface coated with a layer containing a pigment in solid porous particulate form, and, using a printer, printing onto the coated surface of said substrate, a thermal ink which comprises a colour former, a colour developer and a sensitizer, **characterised in that** the sensitizer comprises dimethyl terephthalate, and that the ink also comprises at least one pigment.

2. A method as claimed in claim 1, in which the colour former comprises 3-dibutylamino-6-methyl-7-anilinofluoran.

3. A method as claimed in claim 2, in which 3-dibutylamino-6-methyl-7-anilinofluoran is the only colour former present.

4. A method as claimed in any one of claims 1 to 3, in which the colour developer is bisphenol A.

5. A method as claimed in claim 4, in which bisphenol A is the only colour developer present.

6. A method according to any one of claims 1 to 5, in which the ink is free of wax.

7. A method according to any one of claims 1 to 6, in which the pigment in the ink is calcined clay, precipitated calcium carbonate, and/or silica.

8. A method according to any one of claims 1 to 7, in which the particle size of solids present in the ink is less than 1.5µ, preferably less than 1.0µ.

9. A method according to any one of claims 1 to 8, in which the ink also comprises polyvinyl alcohol.

10. A method as claimed in any one of claims 1 to 9, in which the pigment comprised in the layer coating the base sheet is calcined clay, precipitated calcium carbonate and/or silica.

11. A method as claimed in claim 10, in which said layer also comprises at least one additional pigment.

12. A method as claimed in claim 11, in which said additional pigment is a plastic pigment in the form of hollow spheres.

13. A thermally printable sheet which comprises a base sheet having at least one surface coated with a layer containing a pigment in solid porous particulate form, there being printed upon said coated surface, a thermal ink which comprises a colour former, a colour developer and a sensitizer, **characterised in that** the sensitizer is dimethyl terephthalate, and that the ink also comprises at least one pigment.

14. A sheet as claimed in claim 13, in which the colour former comprises 3-dibutylamino-6-methyl-7-anilinofluoran.

15. A sheet as claimed in claim 14, in which 3-dibutylamino-6-methyl-7-anilinofluoran is the only colour former present.

16. A sheet as claimed in any one of claims 13 to 15, in which the colour developer is bisphenol A.

17. A sheet as claimed in claim 16, in which bisphenol A is the only colour developer present.

18. A sheet according to any one of claims 13 to 17, in which the ink is free of wax.

19. A sheet according to any one of claims 13 to 18, in which the pigment in the ink is calcined clay, precipitated calcium carbonate, and/or silica.

20. A sheet according to any one of claims 13 to 19, in which the particle size of solids present in the ink is less than 1.5µ, preferably less than 1.0µ.

21. A sheet according to any one of claims 13 to 20,in which the ink also comprises polyvinyl alcohol.

22. A sheet as claimed in any one of claims 13 to 21, in which the pigment comprised in the layer coating the base sheet is calcined clay, precipitated calcium carbonate and/or silica.

23. A sheet as claimed in claim 22, in which said layer also comprises at least one additional pigment.

24. A sheet as claimed in claim 23, in which said additional pigment is a plastic pigment in the form of hollow spheres.

25. The use of DMT in a thermal ink comprising a colour former and a colour developer, to reduce unwanted discolouration during storage of a thermally printable sheet product comprising a base sheet having at least one surface coated with a layer containing a pigment in solid porous particulate form, said thermal ink being printed upon said coated surface.

26. The use of a combination of a thermal ink comprising DMT, a colour former and a colour developer, and a surface coating comprising a pigment in solid porous particulate form, to reduce unwanted discolouration during storage of a thermally printable sheet product.

## Patentansprüche

1. Verfahren zum Herstellen eines thermisch bedruckbaren Blattes umfassend das Bereitstellen eines Substrats umfassend ein Rohblatt, welches zumindest eine Oberfläche aufweist, die mit einer Schicht beschichtet ist, welche ein Pigment in fester poröser partikulärer Form aufweist, und Verwenden eines Druckers zum Drucken auf die beschichtete Oberfläche des Substrates, eine thermische Tinte, die ein Farbbildner, einen Farbentwickler und einen Sensibilisator umfasst, **dadurch gekennzeichnet, dass** der Sensibilisator Dimethylterephthalat umfasst und die Tinte ebenfalls zumindest ein Pigment umfasst.

2. Verfahren gemäß Anspruch 1, wobei der Farbbildner 3-Dibutylamino-6-methyl-7-anilinfluoran umfasst.

3. Verfahren nach Anspruch 2, wobei das 3-Dibutylamino-6-methyl-7-anilinfluoran als einziger Farbbildner anwesend ist.

4. Verfahren nach einem der Ansprüche 1 bis 3, wobei der Farbentwickler Bisphenol A ist.

5. Verfahren nach Anspruch 4, wobei Bisphenol A als einziger Farbentwickler anwesend ist.

6. Verfahren nach einem der Ansprüche 1 bis 5, wobei die Tinte frei von Wachs ist.

7. Verfahren nach einem der Ansprüche 1 bis 6, wobei das Pigment in der Tinte kalzinierter Ton, präzipitiertes Kalziumcarbonat und/oder Silika ist.

8. Verfahren nach einem der Ansprüche 1 bis 7, wobei die Partikelgröße der Feststoffe, die in der Tinte vorhanden sind, kleiner als 1,5 µ, bevorzugt kleiner als 1,0 µ ist.

9. Verfahren nach einem der Ansprüche 1 bis 8, wobei die Tinte ferner Polyvinylalkohol umfasst.

10. Verfahren nach einem der Ansprüche 1 bis 9, wobei das Pigment, welches in der Schicht mit der das Rohblatt beschichtet ist, enthalten ist, kalzinierter Ton, präzipitiertes Kalziumcarbonat und/oder Silika ist.

11. Verfahren gemäß Anspruch 10, wobei diese Schicht ebenfalls zumindest ein weiteres zusätzliches Pigment enthält.

12. Verfahren gemäß Anspruch 11, wobei das zusätzliche Pigment ein Kunststoff-Pigment in Form von Hohlkugeln ist.

13. Thermisch bedruckbares Blatt, umfassend ein Rohblatt, welches zumindest eine Oberfläche aufweist, die mit einer Schicht beschichtet ist, welche ein Pigment in fester poröser partikulärer Form aufweist, wobei diese beschichtete Oberfläche mit einer thermischen Tinte, die einen Farbbildner, einen Farbentwickler und einen Sensibilisator umfasst, bedruckt ist, **dadurch gekennzeichnet, dass** der Sensibilisator Dimethylterephtalat ist und die Tinte ebenfalls zumindest ein Pigment umfasst.

14. Blatt gemäß Anspruch 13, wobei der Farbbildner 3-Dibutylamino-6-methyl-7-anilinfluoran umfasst.

15. Blatt gemäß Anspruch 14, wobei 3-Dibutylamino-6-methyl-7-anilinfluoran als einziger Farbbildner anwesend ist.

16. Blatt gemäß einem der Ansprüche 13 bis 15 bei dem der Farbentwickler Bisphenol A ist.

17. Blatt gemäß Anspruch 16, wobei Bisphenol A der einzige anwesende Farbentwickler ist.

18. Blatt gemäß einem der Ansprüche 13 bis 17, wobei die Tinte frei von Wachs ist.

19. Blatt gemäß einem der Ansprüche 13 bis 18, wobei das Pigment in der Tinte kalzinierter Ton, präzipitiertes Kalziumcarbonat und/oder Silika ist.

20. Blatt gemäß einem der Ansprüche 13 bis 19, wobei die Partikelgröße der Feststoffe die in der Tinte anwesend sind, geringer als 1,5 µ, bevorzugt geringer als 1,0 µ ist.

21. Blatt gemäß einem der Ansprüche 13 bis 20, wobei die Tinte ferner Polyvinylalkohol umfasst.

22. Blatt gemäß einem der Ansprüche 13 bis 21, wobei das Pigment, welches in der Schicht, mit der das Rohblatt beschichtet ist, vorhanden ist, kalzinierter Ton, präzipitiertes Kalziumcarbonat und/oder Silika ist.

23. Blatt gemäß Anspruch 22, wobei diese Schicht ebenfalls zumindest ein weiteres zusätzliches Pigment enthält.

24. Blatt gemäß Anspruch 23, wobei das weitere Pigment ein Kunststoff - Pigment in Form von Hohlkugeln ist.

25. Die Verwendung von DMT in einer thermischen Tinte umfassend einen Farbbildner und einen Farbentwickler, zur Verringerung unerwünschter Verfärbungen während der Lagerung von thermisch bedruckbarer Blattware umfassend ein Rohblatt, welches zumindest eine Oberfläche aufweist, die mit einer Schicht beschichtet ist, welche ein Pigment in fester poröser partikulärer Form aufweist, wobei die thermische Tinte auf diese beschichtete Oberfläche aufgedruckt wird.

26. Die Verwendung einer Kombination einer thermischen Tinte umfassend DMT, einen Farbbildner und einen Farbentwickler, und eine Oberflächenbeschichtung umfassend ein Pigment in fester poröser partikulärer Form, um unerwünschte Verfärbungen während der Lagerung einer thermisch bedruckbaren Blattware zu verringern.

## Revendications

1. Procédé pour préparer une feuille thermiquement imprimable, qui consiste à disposer d'un substrat comprenant une feuille de base ayant au moins une surface revêtue d'une couche contenant un pigment sous forme particulaire poreuse solide, et, en utilisant une imprimante, à imprimer, sur la surface revêtue dudit substrat, une encre thermique qui comprend un chromogène, un révélateur chromogène et un sensibilisateur, **caractérisé en ce que** le sensibilisateur comprend du téréphtalate de diméthyle, et **en ce que** l'encre comprend aussi au moins un pigment.

2. Procédé selon la revendication 1, dans lequel le chromogène comprend du 3-dibutylamino-6-méthyl-7-anilinofluorane.

3. Procédé selon la revendication 2, dans lequel le 3-dibutylamino-6-méthyl-7-anilinofluorane est le seul chromogène présent.

4. Procédé selon l'une quelconque des revendications 1 à 3, dans lequel le révélateur chromogène est le bisphénol A.

5. Procédé selon la revendication 4, dans lequel le bisphénol A est le seul révélateur chromogène présent.

6. Procédé selon l'une quelconque des revendications 1 à 5, dans lequel l'encre est exempte de cire.

7. Procédé selon l'une quelconque des revendications 1 à 6, dans lequel le pigment dans l'encre est une argile calcinée, du carbonate de calcium précipité, et/ou de la silice.

8. Procédé selon l'une quelconque des revendications 1 à 7, dans lequel la granulométrie de l'extrait sec présent dans l'encre est inférieure à 1,5 µ, de préférence inférieure à 1,0 µ.

9. Procédé selon l'une quelconque des revendications 1 à 8, dans lequel l'encre comprend aussi du poly(alcool vinylique).

10. Procédé selon l'une quelconque des revendications 1 à 9, dans lequel le pigment se trouvant dans la couche revêtant la feuille de base est une argile calcinée, du carbonate de calcium précipité et/ou de la silice.

11. Procédé selon la revendication 10, dans lequel ladite couche comprend aussi au moins un pigment additionnel.

12. Procédé selon la revendication 11, dans lequel ledit pigment additionnel est un pigment plastique sous la forme de sphères creuses.

13. Feuille thermiquement imprimable qui comprend une feuille de base ayant au moins une surface revêtue d'une couche contenant un pigment sous forme particulaire poreuse solide, une encre thermique, qui comprend un chromogène, un révélateur chromogène et un sensibilisateur, étant imprimée sur ladite surface revêtue, **caractérisée en ce que** le sensibilisateur est le téréphtalate de diméthyle, et **en ce que** l'encre comprend aussi au moins un pigment.

14. Feuille selon la revendication 13, dans laquelle le chromogène comprend du 3-dibutylamino-6-méthyl-7-anilinofluorane.

15. Feuille selon la revendication 14, dans laquelle le 3-dibutylamino-6-méthyl-7-anilinofluorane est le seul chromogène présent.

16. Feuille selon l'une quelconque des revendications 13 à 15, dans laquelle le révélateur chromogène est le bisphénol A.

17. Feuille selon la revendication 16, dans laquelle le bisphénol A est le seul révélateur chromogène présent.

18. Feuille selon l'une quelconque des revendications 13 à 17, dans laquelle l'encre est exempte de cire.

19. Feuille selon l'une quelconque des revendications 13 à 18, dans laquelle le pigment dans l'encre est une argile calcinée, du carbonate de calcium précipité, et/ou de la silice.

20. Feuille selon l'une quelconque des revendications 13 à 19, dans laquelle la granulométrie de l'extrait sec présent dans l'encre est inférieure à 1,5 µ, de préférence inférieure à 1,0 µ.

21. Feuille selon l'une quelconque des revendications 13 à 20, dans laquelle l'encre comprend aussi du poly(alcool vinylique).

22. Feuille selon l'une quelconque des revendications 13 à 21, dans laquelle le pigment se trouvant dans la couche revêtant la feuille de base est une argile calcinée, du carbonate de calcium précipité et/ou de la silice.

23. Feuille selon la revendication 22, dans laquelle ladite couche comprend aussi au moins un pigment additionnel.

24. Feuille selon la revendication 23, dans laquelle ledit pigment additionnel est un pigment plastique sous la forme de sphères creuses.

25. Utilisation de DMT dans une encre thermique comprenant un chromogène et un révélateur chromogène, pour réduire une décoloration non souhaitée durant le stockage d'un produit en feuille thermiquement imprimable comprenant une feuille de base ayant au moins une surface revêtue d'une couche contenant un pigment sous forme particulaire poreuse solide, ladite encre thermique étant imprimée sur ladite surface revêtue.

26. Utilisation d'une combinaison d'une encre thermique comprenant du DMT, un chromogène et un révélateur chromogène, et un revêtement de surface comprenant un pigment sous forme particulaire poreuse solide, pour réduire une décoloration non souhaitée durant le stockage d'un produit en feuille thermiquement imprimable.
